# EUROPÄISCHE PATENTSCHRIFT

(11) **EP 4 565 469 B1**
(45) Veröffentlichungstag und Bekanntmachung des Hinweises auf die Patenterteilung: **25.03.2026**
(21) Anmeldenummer: 23744444.3
(22) Anmeldetag: 18.07.2023
(51) Int. Cl.: B60W 60/00, B60W 30/095

(54) **VERFAHREN UND SYSTEM ZUM ÜBERPRÜFEN EINER PLANTRAJEKTORIE EINES TEILAUTOMATISIERT ODER AUTOMATISIERT FAHRENDEN FAHRZEUGS**
METHOD AND SYSTEM FOR CHECKING A PLANNED TRAJECTORY OF A PARTLY AUTONOMOUS OR AUTONOMOUS VEHICLE
PROCÉDÉ ET SYSTÈME DE VÉRIFICATION D'UNE TRAJECTOIRE PLANIFIÉE D'UN VÉHICULE PARTIELLEMENT AUTONOME OU AUTONOME

(30) Priorität: 01.08.2022 DE 102022207903
(43) Veröffentlichungstag der Anmeldung: 11.06.2025
(73) Patentinhaber: VOLKSWAGEN AKTIENGESELLSCHAFT, 38440 Wolfsburg (DE)
(72) Erfinder: KAIN, Tobias, 3281 Oberndorf/Melk (AT); SCHNEIDER, Jan David, 384446 Wolfsburg (DE)
(86) Internationale Anmeldenummer: PCT/EP2023/069898
(87) Internationale Veröffentlichungsnummer: WO 2024/028100

(56) Entgegenhaltungen:
- EP-A1- 3 699 885
- DE-A1- 102015 221 817
- US-A1- 2018 321 689
- US-A1- 2020 324 762

## Beschreibung

Die Erfindung betrifft ein Verfahren und ein System zum Überprüfen einer Plantrajektorie eines teilautomatisiert oder automatisiert fahrenden Fahrzeugs. Ferner betrifft die Erfindung ein Fahrzeug für ein solches System.

Teilautomatisiert oder automatisiert fahrende Fahrzeuge erzeugen üblicherweise eine Plantrajektorie, welche in der unmittelbaren Zukunft ausgeführt werden soll. Die erzeugten Plantrajektorien müssen hierbei eine zuverlässige Fahrzeugführung sicherstellen.

Aus der DE 10 2018 109 885 A1 ist ein Verfahren zum kooperativen Abstimmen von zukünftigen Fahrmanövern eines Fahrzeugs mit Fremdmanövern zumindest eines Fremdfahrzeugs bekannt, wobei ein Fremddatenpaket von dem Fremdfahrzeug empfangen wird, in dem eine Fremdtrajektorienschar aus einer Fremdbezugstrajektorie enthalten ist, eine Trajektorie aus einer Trajektorienschar für das Fahrzeug als Bezugstrajektorie für das Fahrzeug unter Verwendung der Fremdbezugstrajektorie ausgewählt wird, wobei eine zu der Fremdbezugstrajektorie kollisionsfreie Trajektorie ausgewählt wird, die Trajektorien der Trajektorienschar unter Verwendung von Grenztrajektorien bewertet werden und zumindest eine Kooperationstrajektorie aus den Trajektorien der Trajektorienschar unter Verwendung des Bezugsaufwandswerts ausgewählt wird, wobei ein Datenpaket mit der Bezugstrajektorie und der Kooperationstrajektorie an das Fremdfahrzeug gesendet wird.

Die US 2018 / 0 321 689 A1 beschreibt ein Verfahren zur dezentralen Koordination von Fahrmanövern von mindestens zwei motorisierten Transportfahrzeugen. Dabei werden eine Plan-Trajektorie und eine Wunsch-Trajektorie von einem ersten motorisierten Fortbewegungsmittel auf ein zweites motorisiertes Fortbewegungsmittel übertragen. Im zweiten Kraftfahrzeug wird eine geplante Trajektorie des zweiten Kraftfahrzeugs mit der gewünschten Trajektorie des ersten Kraftfahrzeugs verglichen. Bei Erfüllung des Anpassungskriteriums wird die geplante Trajektorie des zweiten motorisierten Transportfahrzeugs angepasst. Die geplanten und gewünschten Trajektorien des ersten motorisierten Transportfahrzeugs werden mit einer strategischen Trajektorie des ersten motorisierten Transportfahrzeugs kombiniert. Die geplante Trajektorie und eine gewünschte Trajektorie des zweiten motorisierten Transportfahrzeugs werden mit einer strategischen Trajektorie des zweiten motorisierten Transportfahrzeugs kombiniert. Die geplanten Trajektorien des ersten und des zweiten motorisierten Fortbewegungsmittels sind zueinander kollisionsfrei.

Die US 2020 / 0 324 762 A1 beschreibt ein Kraftfahrzeug mit mindestens einem ersten Sensor zur Erfassung von Umfelddaten, mindestens einem zweiten Sensor zur Erfassung von Fahrzeugdaten, einem Kommunikationsmodul zum Herstellen einer Datenverbindung mit einem anderen Kraftfahrzeug, einem Fahrsystem zum automatisierten Fahren des Kraftfahrzeugs, mindestens einem Ausgabeelement für ein optisches/akustisches Warnsignal und einer Steuereinheit. Die Steuereinheit ermittelt eine prognostizierte Trajektorie des Fahrzeugs, ermittelt einen prognostizierten Weg des Fahrzeugs und empfängt über die Datenverbindung eine prognostizierte Trajektorie und Fahrzeuggeometriedaten des anderen Fahrzeugs, ermittelt einen prognostizierten Weg des anderen Fahrzeugs, ermittelt eine mögliche Kollision des Fahrzeugs mit dem anderen Fahrzeug und gibt in Reaktion auf eine mögliche Kollision ein Warnsignal durch das mindestens eine Ausgabeelement aus und/oder führt ein automatisiertes Fahrmanöver durch das Fahrsystem aus.

Die DE 10 2015 221 817 A1 beschreibt ein Verfahren zum dezentralen Abstimmen von Fahrmanövern von mindestens zwei Kraftfahrzeugen. Eine Plan- und eine Wunschtrajektorie werden von einem ersten Kraftfahrzeug übermittelt an ein zweites Kraftfahrzeug. In dem zweiten Kraftfahrzeug wird eine Plantrajektorie des zweiten Kraftfahrzeugs verglichen mit der Wunschtrajektorie des ersten Kraftfahrzeugs. Sofern ein Anpassungskriterium erfüllt ist, wird die Plantrajektorie des zweiten Kraftfahrzeugs angepasst zu einer angepassten Plantrajektorie. Die Plan- und Wunschtrajektorien des ersten Kraftfahrzeugs sind vereinbar mit einer strategischen Trajektorie des ersten Kraftfahrzeugs. Die Plan- und eine Wunschtrajektorie des zweiten Kraftfahrzeugs sind vereinbar mit einer strategischen Trajektorie des zweiten Kraftfahrzeugs. Die Plantrajektorien des ersten und des zweiten Kraftfahrzeugs sind zueinander kollisionsfrei. Das Anpassungskriterium ist, dass die empfangene Wunschtrajektorie des ersten Kraftfahrzeugs mit der Plantrajektorie des zweiten Kraftfahrzeugs kollidiert und durch das Anpassen eine Gesamtkostenfunktion optimiert wird, die zumindest Kostenfunktionen des ersten und des zweiten Kraftfahrzeugs umfasst.

Die EP 3 699 885 A1 beschreibt ein Verfahren zur Vorhersage der Kanalauslastung. Dabei umfasst das Verfahren die Schritte des Bestimmens einer ersten Kanalqualitätsinformation (CQI), die mit einem Standort und einem ersten Zeitpunkt verknüpft ist, des Vorhersagens von Verkehrsflussdaten, die mit dem Standort und einem zweiten Zeitpunkt nach dem ersten Zeitpunkt verknüpft sind, des Vorhersagens einer zweiten CQI, die mit dem Standort und dem zweiten Zeitpunkt verknüpft ist, basierend auf der ersten CQI und dem vorhergesagten Verkehrsfluss; und des selektiven Übertragens einer Nachricht, die die zweite CQI, den Standort und den zweiten Zeitpunkt umfasst, an mindestens ein Fahrzeug basierend auf der zweiten CQI. Außerdem sind ein Fahrzeug und eine Straßenrandeinheit zum Durchführen des Verfahrens beschrieben.

Der Erfindung liegt die Aufgabe zu Grunde, ein Verfahren zum Überprüfen einer Plantrajektorie eines teilautomatisiert oder automatisiert fahrenden Fahrzeugs sowie ein entsprechendes Fahrzeug zu schaffen.

Die Aufgabe wird erfindungsgemäß durch ein Verfahren mit den Merkmalen des Patentanspruchs 1 und ein Fahrzeug mit den Merkmalen des Patentanspruchs 9 gelöst.

Vorteilhafte Ausgestaltungen der Erfindung ergeben sich aus den Unteransprüchen.

Gemäß der Erfindung wird ein Verfahren zum Überprüfen einer Plantrajektorie eines teilautomatisiert oder automatisiert fahrenden Fahrzeugs zur Verfügung gestellt,
i) wobei eine Plantrajektorie des Fahrzeugs an mindestens ein anderes Fahrzeug im Umfeld des Fahrzeugs übermittelt wird, wobei die übermittelte Plantrajektorie im mindestens einen anderen Fahrzeug anhand einer Plantrajektorie des mindestens einen anderen Fahrzeugs überprüft wird, und wobei ein Überprüfungsergebnis an das Fahrzeug übermittelt wird,
   und/oder
ii) wobei eine Plantrajektorie und eine aktuelle Position mindestens eines anderen Fahrzeugs im Umfeld des Fahrzeugs von dem Fahrzeug abgefragt wird, wobei die Plantrajektorie des Fahrzeugs im Fahrzeug anhand der übermittelten Plantrajektorie des anderen Fahrzeugs überprüft wird.

Ferner wird ein System zum Überprüfen einer Plantrajektorie eines teilautomatisiert oder automatisiert fahrenden Fahrzeugs geschaffen, umfassend: mehrere Fahrzeuge, wobei die Fahrzeuge jeweils dazu eingerichtet sind,
i) eine Plantrajektorie an mindestens ein anderes Fahrzeug im Umfeld des Fahrzeugs zu übermitteln und ein Überprüfungsergebnis für die übermittelte Plantrajektorie von dem mindestens einen anderen Fahrzeug zu empfangen; ferner von anderen Fahrzeugen Plantrajektorien zu empfangen, eine von einem anderen Fahrzeug empfangene Plantrajektorie anhand einer eigenen Plantrajektorie des Fahrzeugs zu überprüfen, und ein Überprüfungsergebnis an das jeweils andere Fahrzeug zu übermitteln,
   und/oder
ii) eine Plantrajektorie und eine aktuelle Position mindestens eines anderen Fahrzeugs im Umfeld des Fahrzeugs abzufragen und die Plantrajektorie des Fahrzeugs im Fahrzeug anhand der abgefragten Plantrajektorie des mindestens einen anderen Fahrzeugs zu überprüfen.

Das Verfahren und das System ermöglichen es, eine Plantrajektorie eines teilautomatisiert oder automatisiert fahrenden Fahrzeuges anhand von Plantrajektorien anderer Fahrzeuge zu überprüfen. Einer der Grundgedanken ist hierbei, dass die zu überprüfende Plantrajektorie entweder an ein anderes Fahrzeugs übermittelt wird und dort anhand einer Plantrajektorie des anderen Fahrzeugs überprüft wird oder dass eine Plantrajektorie eines anderen Fahrzeugs, anhand derer die Plantrajektorie des Fahrzeugs überprüft werden kann, von dem anderen Fahrzeug abgefragt wird und ein Überprüfen im Fahrzeug durchgeführt wird. Es können hierzu daher zwei Maßnahmen alternativ oder einander ergänzend ausgeführt werden: Zum einen kann eine Plantrajektorie des Fahrzeugs an mindestens ein anderes Fahrzeug im Umfeld des Fahrzeugs übermittelt werden. Das Übermitteln erfolgt beispielsweise über an sich bekannte Kommunikationsschnittstellen, wie z.B. C2C oder Mobilfunk etc. Die übermittelte Plantrajektorie wird dann im mindestens einen anderen Fahrzeug anhand der Plantrajektorie des mindestens einen anderen Fahrzeugs überprüft. Anschließend wird ein Überprüfungsergebnis von dem mindestens einen anderen Fahrzeug an das Fahrzeug übermittelt. Alternativ oder zusätzlich können eine Plantrajektorie und eine aktuelle Position mindestens eines anderen Fahrzeugs im Umfeld des Fahrzeugs von dem Fahrzeug abgefragt werden. Das Abfragen erfolgt ebenfalls über an sich bekannte Kommunikationsschnittstellen, wie z.B. C2C oder Mobilfunk etc. Die Plantrajektorie des Fahrzeugs wird dann im Fahrzeug anhand der übermittelten Plantrajektorie des anderen Fahrzeugs überprüft.

Die jeweilige Plantrajektorie der Fahrzeuge wird insbesondere von einem Trajektorienplaner ausgehend von erfassten Sensordaten und einem Weltmodell in an sich bekannter Weise erzeugt. Eine solche Plantrajektorie soll insbesondere zu einem zukünftigen Zeitpunkt ausgeführt werden und reicht üblicherweise einige zehn bis Hundert Meter über die aktuelle Position hinaus in die Zukunft.

Das Überprüfen erfolgt beispielsweise mittels einer hierfür eingerichteten Steuereinrichtung in dem Fahrzeug bzw. dem mindestens einen anderen Fahrzeug. Die Steuereinrichtung kann einzeln oder zusammengefasst mit anderen Komponenten als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind.

Die mehreren Fahrzeuge umfassen ferner eine Kommunikationseinrichtung, um miteinander kommunizieren zu können. Die Kommunikationseinrichtung ist beispielsweise dazu eingerichtet, eine C2C-Kommunikation zwischen den Fahrzeugen zu ermöglichen und stellt hierzu eine geeignete Kommunikationsschnittstelle bereit. Grundsätzlich können aber auch andere Kommunikationsverfahren, wie beispielsweise Bluetooth, Mobilfunk (4G, 5G etc.) und/oder WLAN etc. eingesetzt werden. Die Kommunikationseinrichtung ist insbesondere mit der vorgenannten Steuereinrichtung verbunden.

Das Umfeld, in dem sich das mindestens eine andere Fahrzeug befindet, ist insbesondere ein anhand mindestens eines Umfeldkriteriums vorgegebenes Umfeld. Beispielsweise kann dies ein Radius um eine Position des Fahrzeugs herum sein, in dem sich das mindestens eine andere Fahrzeug befinden muss, damit mit diesem verfahrensgemäß interagiert wird. Ferner können auch nur Fahrzeuge in einer vorgegebenen Richtung, z.B. nur vor dem Fahrzeug, berücksichtigt werden. Das Umfeldkriterium kann auch umfassen, dass nur direkt benachbarte Fahrzeuge berücksichtigt werden oder darüber hinaus auch Fahrzeuge in der n-ten Nachbarschaft.

Es kann vorgesehen sein, dass eine Anzahl an möglichen von einem Trajektorienplaner bereits berechneten Trajektorien anhand der Plantrajektorie des anderen Fahrzeugs oder anhand der Plantrajektorien der anderen Fahrzeuge ausgewählt wird. Ausgehend von dieser Anzahl wird dann die Plantrajektorie des Fahrzeugs ausgewählt.

Es kann auch vorgesehen sein, dass eine Plantrajektorie des Fahrzeugs anhand der Plantrajektorie des anderen Fahrzeugs oder der Plantrajektorien der anderen Fahrzeuge verworfen wird und eine andere der aktuell berechneten Trajektorien als Plantrajektorie für das Fahrzeug ausgewählt wird.

Ferner kann vorgesehen sein, dass die erhaltene Plantrajektorie des anderen Fahrzeugs (oder der anderen Fahrzeuge) mit einer Karte im Fahrzeug abgeglichen wird. Hierbei kann beispielsweise überprüft werden, inwieweit eine Kombination der erhaltenen Plantrajektorie mit der Karte des Fahrzeugs plausibel ist. Hierbei kann insbesondere festgestellt werden, dass unter Umständen eine Lokalisierung und somit auch die Plantrajektorie des Fahrzeugs fehlerhaft ist. Hierbei kann ferner verglichen werden, inwieweit die erhaltene Plantrajektorie (oder die erhaltenen Plantrajektorien) mit Trajektorien übereinstimmen oder diesen entsprechen, die im Fahrzeug für andere Fahrzeuge geschätzt (prädiziert) wurden, wenn diese anderen Fahrzeuge keine Plantrajektorien übermittelt haben.

Ferner kann die erhaltene Plantrajektorie des anderen Fahrzeugs (oder die erhaltenen Plantrajektorien der anderen Fahrzeuge) mit diesen geschätzten Trajektorien abgeglichen werden, das heißt, es kann insbesondere ein Maß einer Überstimmung oder eines Unterschiedes bestimmt und beurteilt werden. Hierdurch kann insbesondere ein Maß dafür geschaffen werden, inwiefern die aktuelle Plantrajektorie auf fehlerhaften Informationen (über ein Verhalten der anderen Fahrzeuge, für die Trajektorien prädiziert wurden) basiert.

Ferner können auch Kollisionen zwischen der erhaltenen Plantrajektorie (bzw. den erhaltenen Plantrajektorien) und der Plantrajektorie des Fahrzeugs geschätzt (prädiziert) und beurteilt werden.

Es ist vorgesehen, dass die Maßnahmen i) und/oder ii) nur ausgeführt werden, wenn festgestellt wurde, dass ein der Plantrajektorie des Fahrzeugs zugeordnetes Unsicherheitsmaß einen vorgegebenen Unsicherheitsschwellwert überschreitet oder ein der Plantrajektorie des Fahrzeugs zugeordnetes Konfidenzmaß einen vorgegebenen Konfidenzschwellwert unterschreitet. Hierdurch kann eine Plantrajektorie dann überprüft werden, wenn eine dieser zugeordnete Unsicherheit oder Konfidenz dies erforderlich macht. Insbesondere kann eine Plantrajektorie hierdurch nur dann überprüft werden, wenn dies aufgrund eines konkreten Wertes des Unsicherheitsmaßes oder des Konfidenzmaßes notwendig ist. In anderen Fällen, das heißt, wenn das Unsicherheitsmaß unterhalb des Unsicherheitsschwellwertes oder das Konfidenzmaß oberhalb des Konfidenzschwellwertes liegt, wird jedoch auf ein Übermitteln und/oder Abfragen und Überprüfen der Plantrajektorie zwischen den Fahrzeugen verzichtet, sodass ein Rechenaufwand und ein Datenverkehr reduziert sind. Ein Unsicherheitsmaß kann insbesondere ein der Plantrajektorie zugeordneter Wert für eine Unsicherheit sein (z.B. mit Werten zwischen 0 = sicher und 1 = unsicher), eine Konfidenz kann insbesondere ein der Plantrajektorie zugeordneter Wert für eine Konfidenz sein (z.B. mit Werten zwischen 0 = keine Konfidenz und 1 = maximale Konfidenz). Das Unsicherheitsmaß und das Konfidenzmaß können äquivalent zueinander verwendet und/oder in einander umgerechnet werden. Ausgangspunkt für diese Werte kann beispielsweise ein von einer Künstlichen Intelligenz, beispielsweise einem Maschinenlernverfahren, das zur Umfelderfassung, Objekterkennung und/oder Trajektorienplanung verwendet wird, zu einer Ausgabe gelieferter Unsicherheitswert oder Konfidenzwert sein. Im Bereich der Künstlichen Intelligenz, insbesondere bei Verwendung von Neuronalen Netzen, können beispielsweise Verfahren wie Monte-Carlo-Dropout oder Ensembleverfahren zum Einsatz kommen, um eine Unsicherheit oder eine Konfidenz zu schätzen. Bei der Objekterkennung kann beispielsweise auch ein zeitlicher Verlauf der Objekterkennung berücksichtigt werden: Ändert sich eine Klassifizierung für ein Objekt oft ("Flickern"), so ist die Klassifizierung als unsicher zu beurteilen; bleibt die Klassifizierung hingegen im zeitlichen Verlauf (in der Historie) weitgehend gleich, spricht dies für eine geringere Unsicherheit. Auch eine Unsicherheit oder eine Konfidenz von Sensordaten kann als Ausgangspunkt für diese Werte dienen. Insbesondere können mehrere Werte, beispielsweise von einer Unsicherheit und/oder Konfidenz der Umfeldsensoren, einer Umfelderfassung, einer Objekterkennung und/oder einer Trajektorienplanung zu einem Gesamtwert für die Unsicherheit oder die Konfidenz fusioniert werden. Ausgehend hiervon wird dann anhand der vorgegebenen Schwellwerte überprüft, ob die Schwellwerte überschritten (Unsicherheitsmaß) oder unterschritten (Konfidenzmaß) wurden. Die Schwellwerte können beispielsweise durch empirische Versuchsreihen bestimmt werden. Die Schwellwerte können beispielsweise ausgehend von einer Analyse von Verteilungen der Unsicherheiten festgelegt
werden. So kann beispielsweise vorgesehen sein, dass bei einer Existenz von Unsicherheiten außerhalb des 0,95-Perzentils über eine hinreichend große Anzahl an Zeitschritten ein Übermitteln erfolgt. Alternativ können auch selten auftretende Fälle (sogenannte "Corner Cases") im Feld analysiert werden, um hieraus Schwellwerte abzuleiten.

Es kann vorgesehen sein, den vorgegebenen Unsicherheitsschwellwert und/oder den vorgegebenen Konfidenzschwellwert ortsabhängig festzulegen. Insbesondere kann vorgesehen sein, den vorgegebenen Unsicherheitsschwellwert und/oder den vorgegebenen Konfidenzschwellwert basierend auf Karteninformationen oder zeitlich aggregierten Informationen in einzelnen Szenarien festzulegen, beispielsweise indem lokale Unsicherheiten über die Zeit geglättet werden und dann nach Ausreißern gesucht wird.

In einer Ausführungsform ist vorgesehen, dass das Überprüfen der Plantrajektorie des Fahrzeugs einen zumindest abschnittsweisen Vergleich der Plantrajektorie des Fahrzeugs mit der Plantrajektorie von mindestens einem anderen Fahrzeug umfasst. Hierdurch kann ein Verlauf der Plantrajektorie des Fahrzeugs mit einem Verlauf des mindestens einen anderen Fahrzeugs überprüft, insbesondere plausibilisiert, werden. Verlaufen die miteinander verglichenen Plantrajektorien abschnittsweise gleich, so ist eine größere Plausibilität anzunehmen, als wenn die verglichenen Plantrajektorien nicht gleich verlaufen.

Es kann weiterbildend vorgesehen sein, dass das Überprüfen der Plantrajektorie des Fahrzeugs den zumindest abschnittsweisen Vergleich nur mit Plantrajektorien von anderen Fahrzeugen durchführt, welche aktuell eine gleiche Intention aufweisen und/oder ein gleiches Manöver wie das Fahrzeug ausführen. Eine Intention soll hierbei insbesondere ein aktuelles, insbesondere kurzfristiges, Ziel bezeichnen (z.B. Abbiegen, Ausfahrt nehmen etc.). Ein Manöver soll hierbei eine aktuell ausgeführte Aktion des Fahrzeugs zum Erreichen des Zieles bezeichnen (Rechtsabbiegen, Spurwechseln etc.). Hierdurch können insbesondere Plantrajektorien zum Überprüfen und Vergleichen verwendet werden, die mit der gleichen Intention und dem gleichen Manöver zusammenfallen. Die Intention und/oder das Manöver kann/können zusammen mit der Plantrajektorie übermittelt werden.

In einer Ausführungsform ist vorgesehen, dass der Vergleich der Plantrajektorie des Fahrzeugs mit der Plantrajektorie des mindestens einen anderen Fahrzeugs eine Kollisionserkennung umfasst. Hierdurch können Kollisionen zwischen dem Fahrzeug und dem mindestens einen anderen Fahrzeug verhindert werden. Insbesondere kann hierzu überprüft werden, ob die Plantrajektorie des Fahrzeugs sich mit einer Plantrajektorie eines anderen Fahrzeugs im Umfeld schneidet. Ist dies der Fall, so ist eine Kollision wahrscheinlich; ist dies hingegen nicht der Fall, so sind die Plantrajektorien kollisionsfrei.

In einer Ausführungsform ist vorgesehen, dass ein Überprüfungsergebnis ausgehend von Vergleichsergebnissen der Vergleiche der Plantrajektorie des Fahrzeugs mit den Plantrajektorien von mehreren anderen Fahrzeugen nach einem Votingprinzip erzeugt wird. Hierdurch können die Vergleichsergebnisse in ein Gesamtergebnis überführt werden. Das Votingprinzip erlaubt es insbesondere, eine Mehrheitsentscheidung zu treffen, insbesondere indem als Schwellwert ein m-aus-n-Kriterium vorgegeben wird (mit m, n = 1, 2, ... aus der Menge der natürlichen Zahlen und m <= n). Bei einer solchen m-aus-n-Entscheidung müssen m aus n Überprüfungen der Plantrajektorie die Plantrajektorie bestätigen, damit die Plantrajektorie als plausibel bzw. validiert und damit umsetzbar beurteilt wird. Wurde die Plantrajektorie des Fahrzeugs beispielsweise an fünf andere Fahrzeuge im Umfeld des Fahrzeugs übermittelt, so kann als m-aus-n-Kriterium vorgegeben sein, dass 4-aus-5 Fahrzeugen bzw. 4-aus-5 Überprüfungsergebnisse gleich sein müssen, damit die vier gleichen Überprüfungsergebnisse als Gesamtüberprüfungsergebnis übernommen werden (z.B. Plantrajektorie des Fahrzeugs ist gültig und/oder plausibel und/oder valide oder ungültig und/oder unplausibel und/oder nicht valide etc.).

In einer Ausführungsform ist vorgesehen, dass ein Radius um das Fahrzeug, in dem verfahrensgemäß mit anderen Fahrzeugen kommuniziert wird, unter Berücksichtigung einer Geschwindigkeit und/oder mindestens einer anderen Zustandsgröße des Fahrzeugs und/oder mindestens einer Zustandsgröße des Umfelds festgelegt wird. Hierdurch kann insbesondere eine Anzahl der im Rahmen der verfahrensgemäßen Kommunikation berücksichtigten Fahrzeuge auf ein begrenztes Umfeld reduziert werden. So kann beispielsweise vorgesehen sein, die Abhängigkeit des Radius von der Geschwindigkeit des Fahrzeugs derart vorzugeben, dass ein Radius mit zunehmender Geschwindigkeit ansteigt. Steht das Fahrzeug beispielsweise im Stau, so können lediglich die direkt benachbarten anderen Fahrzeuge im Umfeld berücksichtigt werden. Fährt das Fahrzeug hingegen mit einer Geschwindigkeit von 130 km/h auf der Autobahn, so wird der Radius größer gewählt und es werden auch weiter entfernte andere Fahrzeuge berücksichtigt. Ob andere Fahrzeuge innerhalb des Radius sind oder nicht, kann beispielsweise anhand von C2C-Nachrichten, in denen eine jeweilige Position der anderen Fahrzeuge enthalten ist, und einer aktuellen Position des Fahrzeugs, bestimmt werden. Eine Zustandsgröße des Umfelds kann beispielsweise eine Witterung und/oder Wetterverhältnisse umfassen. So kann beispielsweise bei sonnigem Wetter ein kleinerer Radius vorgesehen sein, wohingegen bei regnerischem Wetter und/oder Nebel aufgrund der schlechten Sicht ein größerer Radius vorgesehen sein kann.

In einer Ausführungsform ist vorgesehen, dass anhand eines Überprüfungsergebnisses entschieden wird, ob die Plantrajektorie des Fahrzeugs ausgeführt oder verworfen wird. Hierdurch kann das Überprüfungsergebnis direkt in ein Fahrverhalten des Fahrzeugs überführt werden.

In einer weiterbildenden Ausführungsform ist vorgesehen, dass bei Verwerfen der Plantrajektorie:
a) eine neue Plantrajektorie erzeugt wird, oder
b) eine Plantrajektorie eines anderen Fahrzeugs zumindest teilweise übernommen und/oder angepasst wird, oder
c) ein Notfallmanöver durchgeführt wird.

Eine erzeugte neue Plantrajektorie wird dann insbesondere ebenfalls mittels des Verfahrens überprüft. Auch die übernommene und/oder angepasste Plantrajektorie kann mittels des Verfahrens überprüft werden. Ein Notfallmanöver umfasst beispielsweise eine Notbremsung und/oder das Ansteuern eines Seitenstreifens einer Straße.

Es kann vorgesehen sein, dass die Plantrajektorie des Fahrzeugs zusätzlich anhand von Kartendaten überprüft wird, wobei ein Ergebnis im Überprüfungsergebnis berücksichtigt wird. Hierdurch kann das Überprüfen weiter verbessert werden. Beispielsweise kann überprüft werden, ob die Plantrajektorie des Fahrzeugs mit einem den Kartendaten entnehmbaren Straßenverlauf übereinstimmt oder nicht.

Weitere Merkmale zur Ausgestaltung des Systems ergeben sich aus der Beschreibung von Ausgestaltungen des Verfahrens. Die Vorteile des Systems sind hierbei jeweils die gleichen wie bei den Ausgestaltungen des Verfahrens.

Ferner wird insbesondere auch ein Fahrzeug für ein System nach einer der beschriebenen Ausführungsformen geschaffen, wobei das Fahrzeug dazu eingerichtet ist,
i) eine Plantrajektorie an mindestens ein anderes Fahrzeug im Umfeld des Fahrzeugs zu übermitteln und ein Überprüfungsergebnis für die übermittelte Plantrajektorie von dem mindestens einen anderen Fahrzeug zu empfangen; ferner von anderen Fahrzeugen Plantrajektorien zu empfangen, eine von einem anderen Fahrzeug empfangene Plantrajektorie anhand einer eigenen Plantrajektorie des Fahrzeugs zu überprüfen, und ein Überprüfungsergebnis an das jeweils andere Fahrzeug zu übermitteln,
   und/oder
ii) eine Plantrajektorie und eine aktuelle Position mindestens eines anderen Fahrzeugs im Umfeld des Fahrzeugs abzufragen und die Plantrajektorie des Fahrzeugs im Fahrzeug anhand der abgefragten Plantrajektorie des mindestens einen anderen Fahrzeugs zu überprüfen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform des Systems zum Überprüfen einer Plantrajektorie eines teilautomatisiert oder automatisiert fahrenden Fahrzeugs;
- Fig. 2: eine schematische Darstellung zur Verdeutlichung des Verfahrens zum Überprüfen einer Plantrajektorie eines teilautomatisiert oder automatisiert fahrenden Fahrzeugs;
- Fig. 3: eine weitere schematische Darstellung zur Verdeutlichung des Verfahrens zum Überprüfen einer Plantrajektorie eines teilautomatisiert oder automatisiert fahrenden Fahrzeugs.

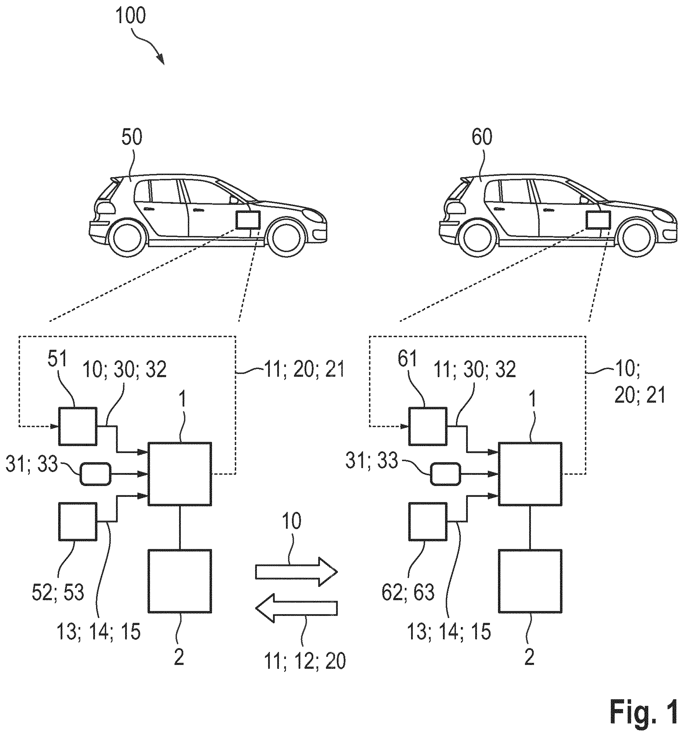

Die Fig. 1 zeigt eine schematische Darstellung einer Ausführungsform des Systems 100 zum Überprüfen einer Plantrajektorie 10 eines teilautomatisiert oder automatisiert fahrenden Fahrzeugs 50. Das System 50 umfasst mehrere Fahrzeuge 50, 60. Die einzelnen Merkmale der Fahrzeuge 50, 60 sind größtenteils mit gleichen Bezugszeichen versehen, da die Fahrzeuge 50, 60 des Systems 1 insbesondere gleichartig ausgebildet sind. Das in dieser Offenbarung beschriebene Verfahren wird nachfolgend beispielhaft anhand des Systems 100 erläutert. Dort, wo es der Verdeutlichung des in dieser Offenbarung beschriebenen Verfahrens dient, wurden unterschiedliche Bezugszeichen gewählt.

Das Fahrzeug 50 umfasst eine Steuereinrichtung 1 und eine Kommunikationseinrichtung 2. Die Steuereinrichtung 1 umfasst eine Recheneinrichtung und eine Speicher (beide nicht gezeigt). Die Steuereinrichtung 1 ist dazu eingerichtet, eine Plantrajektorie 10 von einem Trajektorienplaner 51 des Fahrzeugs 50 zu erhalten und mittels der Kommunikationseinrichtung 2, beispielsweise via C2C, an mindestens ein anderes Fahrzeug 60 im Umfeld des Fahrzeugs 50 zu übermitteln.

Das gezeigte andere Fahrzeug 60 des Systems 100 umfasst ebenfalls eine Steuereinrichtung 1 und eine Kommunikationseinrichtung 2. Die Steuereinrichtung 1 des anderen Fahrzeugs 60 ist dazu eingerichtet, die von dem Fahrzeug 50 übermittelte Plantrajektorie 10 zu empfangen, die von dem Fahrzeug 50 empfangene Plantrajektorie 10 anhand einer eigenen Plantrajektorie 11, welche von einem Trajektorienplaner 61 des anderen Fahrzeugs 60 bereitgestellt wird, zu überprüfen, und ein Überprüfungsergebnis 20 mittels der Kommunikationseinrichtung 2 an das Fahrzeug 50 zu übermitteln.

Die Steuereinrichtung 1 des Fahrzeugs 50 ist weiter dazu eingerichtet, das Überprüfungsergebnis 20 für die übermittelte Plantrajektorie 10 von dem anderen Fahrzeug 60 zu empfangen. Das Überprüfungsergebnis 20 kann dann einer weiteren Planung des teilautomatisiert oder automatisierten Fahrens zugrunde gelegt werden.

Alternativ oder zusätzlich ist die Steuereinrichtung 1 dazu eingerichtet, eine Plantrajektorie 11 und eine aktuelle Position 12 des anderen Fahrzeugs 60 abzufragen und die Plantrajektorie 10 des Fahrzeugs 50 anhand der abgefragten Plantrajektorie 11 des anderen Fahrzeugs 50 zu überprüfen. Zum Abfragen kann die Steuereinrichtung 1 beispielsweise eine Abfragenachricht 16 übermitteln. Die Steuereinrichtung 1 des anderen Fahrzeugs 60 ist dazu eingerichtet, nach Erhalt der Abfrage, die Plantrajektorie 11 und die aktuelle Position 12 mittels der Kommunikationseinrichtung 2 an das Fahrzeug 50 zu übermitteln.

Die Steuereinrichtungen 1 der Fahrzeuge 50, 60 sind in gleicher Weise eingerichtet, das heißt, das andere Fahrzeug 50 kann die beschriebenen Maßnahmen in gleicher Weise ausführen wie das Fahrzeug 50, sodass mehrere Fahrzeuge 50, 60 die jeweiligen Plantrajektorien 10, 11 auf die beschriebene Weise überprüfen können.

Es ist vorgesehen, dass die beschriebenen Maßnahmen nur ausgeführt werden, wenn festgestellt wurde, dass ein der Plantrajektorie 10 des Fahrzeugs 50 zugeordnetes Unsicherheitsmaß 30 einen vorgegebenen Unsicherheitsschwellwert 31 überschreitet oder ein der Plantrajektorie 10 des Fahrzeugs 50 zugeordnetes Konfidenzmaß 32 einen vorgegebenen Konfidenzschwellwert 33 unterschreitet. Die Maße 30, 32 werden von dem Trajektorienplaner 51 zusammen mit der Plantrajektorie 10 bereitgestellt. Die Steuereinrichtung 1 ist dazu eingerichtet, das Unsicherheitsmaß 30 oder das Konfidenzmaß 32 anhand des Unsicherheitsschwellwertes 31 bzw. des Konfidenzschwellwertes 33 zu überprüfen und die voranstehend beschriebenen Maßnahmen auszulösen, wenn die Schwellwerte über- bzw. unterschritten werden.

Es kann vorgesehen sein, dass das Überprüfen der Plantrajektorie 10 des Fahrzeugs 50 einen zumindest abschnittsweisen Vergleich der Plantrajektorie 10 des Fahrzeugs 50 mit der Plantrajektorie 11 von dem anderen Fahrzeug 60 umfasst. Dies betrifft sowohl das Überprüfen in dem anderen Fahrzeug 60 als auch das Überprüfen in dem Fahrzeug 50. Die Steuereinrichtungen 1 sind dazu eingerichtet, den zumindest abschnittsweisen Vergleich durchzuführen. Insbesondere werden hierbei einzelne Positionen der Plantrajektorien 10, 11 miteinander verglichen. Es kann hierzu vorgesehen sein, zumindest abschnittsweise einen Vergleich mit Hilfe der Methode der kleinsten Quadrate oder ein anderes geeignetes Differenzmaß durchzuführen, um abschnittsweise eine Übereinstimmung bzw. eine Abweichung der Plantrajektorien 10, 11 voneinander zu bestimmen. Beispielsweise kann die Plantrajektorie 10 des Fahrzeugs 50 als umso besser/höher bewertet werden (z.B. in Form eines Plausibilitätswertes), je kleiner der resultierende (aufsummierter) Abstand ist, also umso größer die Übereinstimmung ist.

Weiterbildend kann vorgesehen sein, dass der Vergleich der Plantrajektorie 10 des Fahrzeugs 50 mit der Plantrajektorie 11 des anderen Fahrzeugs 60 eine Kollisionserkennung umfasst. Hierzu wird insbesondere überprüft, ob die Plantrajektorien 10, 11 sich zu irgendeinem Zeitpunkt kreuzen und/oder ob zu irgendeinem Zeitpunkt ein vorgegebener Mindestabstand zwischen den Plantrajektorien 10, 11 unterschritten wird. Die Steuereinrichtungen 1 sind dazu eingerichtet, den Vergleich durchzuführen und ein Vergleichsergebnis bereitzustellen.

Es kann vorgesehen sein, dass ein Überprüfungsergebnis 20 ausgehend von Vergleichsergebnissen der Vergleiche der Plantrajektorie 10 des Fahrzeugs 50 mit den Plantrajektorien 11 von mehreren anderen Fahrzeugen 60 (der Übersichtlichkeit halber ist nur eines der Fahrzeuge 60 gezeigt) nach einem Votingprinzip erzeugt wird. Die Steuereinrichtungen 1 sind dazu eingerichtet, bei mehreren erhaltenen Überprüfungsergebnissen 20 und/oder Vergleichsergebnissen das endgültige Überprüfungsergebnis 20 ausgehend von den erhaltenen Überprüfungsergebnissen 20 und/oder Vergleichsergebnissen nach dem Votingprinzip (m-aus-n-Entscheidung) zu erzeugen.

Es kann vorgesehen sein, dass ein Radius um das Fahrzeug 50, in dem verfahrensgemäß mit anderen Fahrzeugen 60 kommuniziert wird, unter Berücksichtigung einer Geschwindigkeit 13 und/oder mindestens einer anderen Zustandsgröße 14 des Fahrzeugs 50 und/oder mindestens einer Zustandsgröße 15 des Umfelds festgelegt wird. Die Geschwindigkeit 13 und die Zustandsgrößen 14, 15 können beispielsweise von einer Fahrzeugsteuerung 52 (und/oder Umfeldsensorik 53) des Fahrzeugs 50 bereitgestellt und/oder abgefragt werden. Die Abhängigkeit kann beispielsweise in Form einer Kennlinie oder eine Kennfeldes in den Steuereinrichtungen 1 hinterlegt sein. Die Kennlinie verknüpft dann Werte der Geschwindigkeit 13 und/oder der Zustandsgrößen 14, 15 mit einem Wert für einen Radius um das Fahrzeug 50 herum. Eine verfahrensgemäße Kommunikation zum Austausch von Plantrajektorien 10, 11 erfolgt dann nur mit anderen Fahrzeugen 60 innerhalb des derart bestimmten Radius.

Es kann vorgesehen sein, dass anhand eines Überprüfungsergebnisses 20 entschieden wird, ob die Plantrajektorie 10 des Fahrzeugs 50 ausgeführt oder verworfen wird. Insbesondere umfasst das Überprüfungsergebnis 20 eine Information darüber, ob die Plantrajektorie 10 gültig/plausibel/valide ist. Es kann vorgesehen sein, dass das Überprüfungsergebnis 20 eine Bewertung umfasst, welche in Form eines Wertes die vorgenannten Eigenschaften (gültig/nicht gültig und/oder plausibel/nicht plausibel und/oder valide/nicht valide) ausdrückt. Die Steuereinrichtung 1 kann dann beispielsweise anhand des Wertes der Bewertung und eines vorgegebenen Schwellwertes feststellen, ob die Plantrajektorie 10 ausgeführt oder verworfen werden soll.

Weiterbildend kann vorgesehen sein, dass bei Verwerfen der Plantrajektorie 10:
a) eine neue Plantrajektorie 10 erzeugt wird, beispielsweise, indem die Steuereinrichtung 1 dem Trajektorienplaner 51 das Überprüfungsergebnis 20 oder ein Verwerfungssignal 21 übermittelt, oder
b) eine Plantrajektorie 11 eines anderen Fahrzeugs 60 zumindest teilweise übernommen und/oder angepasst wird, beispielsweise indem die Plantrajektorie 11 des anderen Fahrzeugs 60 dem Trajektorienplaner 51 zur Übernahme und/oder zum Anpassen übermittelt wird, oder
c) ein Notfallmanöver durchgeführt wird, wobei der Trajektorienplaner 51 eine Aktorik des Fahrzeugs entsprechend ansteuert und/oder regelt.

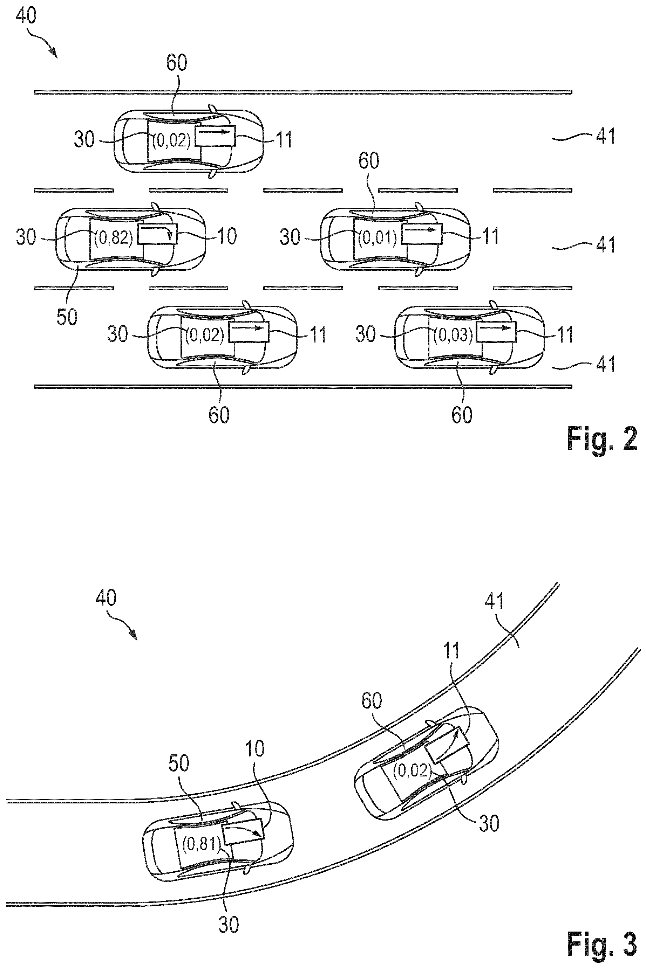

Die Fig. 2 zeigt eine schematische Darstellung zur Verdeutlichung des Verfahrens zum Überprüfen einer Plantrajektorie 10 eines teilautomatisiert oder automatisiert fahrenden Fahrzeugs 50. Dargestellt ist eine Straßenszene 40 auf einer Straße mit drei Fahrspuren 41. Die Straßenszene 40 umfasst das Fahrzeug 50 und vier andere Fahrzeuge 60. Gezeigt sind jeweils die Plantrajektorien 10, 11 der Fahrzeuge 50, 60. Die Plantrajektorien 11 der anderen Fahrzeuge 60 weisen alle geradeaus in Fahrtrichtung. Die von dem Trajektorienplaner des Fahrzeugs 50 gelieferte Plantrajektorie 10 weist hingegen scharf nach rechts. Zu jeder Plantrajektorie 10, 11 ist in Klammern ein Unsicherheitsmaß 30 angegeben, wobei davon ausgegangen wird, dass die möglichen Werte zwischen 0 (= sicher bzw. beste Bewertung) und 1 (= unsicher bzw. schlechteste Bewertung) liegen können. Die Werte für die Plantrajektorien 11 der anderen Fahrzeuge 60 liegen alle knapp über Null, wohingegen der Wert für die Plantrajektorie 10 des Fahrzeugs 50 0,82 beträgt. Der Grund für die große Unsicherheit kann hierbei beispielsweise sein, dass das rechts vor dem Fahrzeug 50 fahrende andere Fahrzeug 60 nicht erkannt wurde, beispielsweise weil falsche Sensordaten vorliegen, deren Ursache ein defekter Radarsensor ist. Es wurde daher von dem Fahrzeug 50 festgestellt, dass ein vorgegebener Unsicherheitsschwellwert (z.B. 0,5) überschritten wurde. Das Fahrzeug 50 führt das Verfahren, wie voranstehend mit Bezug auf das System beispielhaft beschrieben, aus und gelangt zu dem Ergebnis, dass die Plantrajektorie 10 zu verwerfen ist. Bei einem zumindest abschnittsweisen Vergleich der Plantrajektorie 10 mit den Plantrajektorien 11 der anderen Fahrzeuge 60 wird insbesondere festgestellt, dass die Plantrajektorien 11 der anderen Fahrzeuge 60 im unmittelbaren Umfeld kein scharfes Rechtabbiegen beinhalten. Ferner sind die zugehörigen Unsicherheitsmaße 30 der Plantrajektorien 11 der anderen Fahrzeuge 60 alle nahezu bei Null. Hieraus wird im Rahmen des Vergleichs geschlossen, dass die Plantrajektorie 10 des Fahrzeugs 50 zu verwerfen ist.

Die Fig. 3 zeigt eine weitere schematische Darstellung zur Verdeutlichung des Verfahrens zum Überprüfen einer Plantrajektorie 10 eines teilautomatisiert oder automatisiert fahrenden Fahrzeugs 50. Dargestellt ist erneut eine Straßenszene 40 auf einer Straße mit einer Fahrspur 41, wobei es sich um einen Kurvenabschnitt handelt. Die Straßenszene 40 umfasst das Fahrzeug 50 und ein anderes vorausfahrendes Fahrzeug 60. Gezeigt sind jeweils die Plantrajektorien 10, 11 der Fahrzeuge 50, 60. Die Plantrajektorie 11 des anderen Fahrzeugs 60 folgt dem Kurvenverlauf. Die von dem Trajektorienplaner des Fahrzeugs 50 gelieferte Plantrajektorie 10 weist hingegen nach rechts. Zu den Plantrajektorien 10, 11 ist in Klammern ein Unsicherheitsmaß 30 angegeben, wobei davon ausgegangen wird, dass die möglichen Werte zwischen 0 (= sicher bzw. beste Bewertung) und 1 (= unsicher bzw. schlechteste Bewertung) liegen können. Der Wert für die Plantrajektorie 11 des anderen Fahrzeugs 60 liegt knapp über Null, wohingegen der Wert für die Plantrajektorie 10 des Fahrzeugs 50 0,81 beträgt. Der Grund für die große Unsicherheit kann hierbei beispielsweise sein, dass eine Umfelderfassung und/oder Umfeldinterpretation fehlerhaft ist, beispielsweise weil falsche Sensordaten vorliegen oder diese falsch interpretiert wurden. Es wurde daher von dem Fahrzeug 50 festgestellt, dass ein vorgegebener Unsicherheitsschwellwert (z.B. 0,5) überschritten wurde. Das Fahrzeug 50 führt das Verfahren wie voranstehend mit Bezug auf das System beispielhaft beschrieben aus und gelangt zu dem Ergebnis, dass die Plantrajektorie 10 zu verwerfen ist. Bei einem zumindest abschnittsweisen Vergleich der Plantrajektorie 10 mit der Plantrajektorie 11 des anderen Fahrzeugs 60 wird insbesondere festgestellt, dass die Plantrajektorie 11 des anderen Fahrzeugs 60 im unmittelbaren Umfeld kein Rechtslenken, sondern ein Linkslenken beinhaltet. Ferner ist das zugehörige Unsicherheitsmaß 30 der Plantrajektorie 11 des anderen Fahrzeugs 60 nahezu bei Null. Hieraus wird im Rahmen des Vergleichs geschlossen, dass die Plantrajektorie 10 des Fahrzeugs 50 zu verwerfen ist.

### Bezugszeichenliste

- 1: Steuereinrichtung
- 2: Kommunikationseinrichtung
- 10: Plantrajektorie (Fahrzeug)
- 11: Plantrajektorie (anderes Fahrzeug)
- 12: aktuelle Position
- 13: Geschwindigkeit
- 14: Zustandsgröße (Fahrzeug)
- 15: Zustandsgröße (Umfeld)
- 16: Abfragenachricht
- 20: Überprüfungsergebnis
- 21: Verwerfungssignal
- 30: Unsicherheitsmaß
- 31: Unsicherheitsschwellwert
- 32: Konfidenzmaß
- 33: Konfidenzschwellwert
- 40: Straßenszene
- 41: Fahrspur
- 50: Fahrzeug
- 51: Trajektorienplaner
- 52: Fahrzeugsteuerung
- 53: Umfeldsensorik
- 60: anderes Fahrzeug
- 61: Trajektorienplaner
- 62: Fahrzeugsteuerung
- 63: Umfeldsensorik
- 100: System

## Patentansprüche

1. Verfahren zum Überprüfen einer Plantrajektorie (10) eines teilautomatisiert oder automatisiert fahrenden Fahrzeugs (50),
i) wobei eine Plantrajektorie (10) des Fahrzeugs (50) an mindestens ein anderes Fahrzeug (60) im Umfeld des Fahrzeugs (50) übermittelt wird, wobei die übermittelte Plantrajektorie (10) im mindestens einen anderen Fahrzeug (60) anhand einer Plantrajektorie (11) des mindestens einen anderen Fahrzeugs (60) überprüft wird, und wobei ein Überprüfungsergebnis (20) an das Fahrzeug (50) übermittelt wird,
und/oder
ii) wobei eine Plantrajektorie (11) und eine aktuelle Position (12) mindestens eines anderen Fahrzeugs (60) im Umfeld des Fahrzeugs (50) von dem Fahrzeug (50) abgefragt wird, wobei die Plantrajektorie (10) des Fahrzeugs (50) im Fahrzeug (50) anhand der übermittelten Plantrajektorie (11) des anderen Fahrzeugs (50) überprüft wird,
wobei die Maßnahmen i) und/oder ii) nur ausgeführt werden, wenn festgestellt wurde, dass ein der Plantrajektorie (10) des Fahrzeugs (50) zugeordnetes Unsicherheitsmaß (30) einen vorgegebenen Unsicherheitsschwellwert (31) überschreitet oder ein der Plantrajektorie (10) des Fahrzeugs (50) zugeordnetes Konfidenzmaß (32) einen vorgegebenen Konfidenzschwellwert (33) unterschreitet.

2. Verfahren nach Anspruch 1, **dadurch gekennzeichnet, dass** das Überprüfen der Plantrajektorie (10) des Fahrzeugs (50) einen zumindest abschnittsweisen Vergleich der Plantrajektorie (10) des Fahrzeugs (50) mit der Plantrajektorie (11) von mindestens einem anderen Fahrzeug (60) umfasst.

3. Verfahren nach Anspruch 2, **dadurch gekennzeichnet, dass** der Vergleich der Plantrajektorie (10) des Fahrzeugs (50) mit der Plantrajektorie (11) des mindestens einen anderen Fahrzeugs (60) eine Kollisionserkennung umfasst.

4. Verfahren nach Anspruch 2 oder 3, **dadurch gekennzeichnet, dass** ein Überprüfungsergebnis (20) ausgehend von Vergleichsergebnissen der Vergleiche der Plantrajektorie (10) des Fahrzeugs (50) mit den Plantrajektorien (11) von mehreren anderen Fahrzeugen (60) nach einem Votingprinzip erzeugt wird.

5. Verfahren nach einem der vorangegangenen Ansprüche, **dadurch gekennzeichnet, dass** ein Radius um das Fahrzeug (50), in dem verfahrensgemäß mit anderen Fahrzeugen (60) kommuniziert wird, unter Berücksichtigung einer Geschwindigkeit (13) und/oder mindestens einer anderen Zustandsgröße (14) des Fahrzeugs (50) und/oder mindestens einer Zustandsgröße (15) des Umfelds festgelegt wird.

6. Verfahren nach einem der vorangegangenen Ansprüche, **dadurch gekennzeichnet, dass** anhand eines Überprüfungsergebnisses (20) entschieden wird, ob die Plantrajektorie (10) des Fahrzeugs (50) ausgeführt oder verworfen wird.

7. Verfahren nach Anspruch 6, **dadurch gekennzeichnet, dass** bei Verwerfen der Plantrajektorie (10):
a) eine neue Plantrajektorie (10) erzeugt wird, oder
b) eine Plantrajektorie (11) eines anderen Fahrzeugs (60) zumindest teilweise übernommen und/oder angepasst wird, oder
c) ein Notfallmanöver durchgeführt wird.

8. System (100) zum Überprüfen einer Plantrajektorie (10) eines teilautomatisiert oder automatisiert fahrenden Fahrzeugs (50), umfassend:
mehrere Fahrzeuge (50,60) gemäß Anspruch 9.

9. Fahrzeug (50, 60),
wobei das Fahrzeug (50,60) dazu eingerichtet ist,
i) eine Plantrajektorie (10) an mindestens ein anderes Fahrzeug (50) im Umfeld des Fahrzeugs (50) zu übermitteln und ein Überprüfungsergebnis (20) für die übermittelte Plantrajektorie (10) von dem mindestens einen anderen Fahrzeug (60) zu empfangen; ferner von anderen Fahrzeugen (60) Plantrajektorien (11) zu empfangen, eine von einem anderen Fahrzeug (60) empfangene Plantrajektorie (11) anhand einer eigenen Plantrajektorie (10) des Fahrzeugs (50) zu überprüfen, und ein Überprüfungsergebnis (20) an das jeweils andere Fahrzeug (60) zu übermitteln,
und/oder
ii) eine Plantrajektorie (11) und eine aktuelle Position (12) mindestens eines anderen Fahrzeugs (60) im Umfeld des Fahrzeugs (50) abzufragen und die Plantrajektorie (10) des Fahrzeugs (50) im Fahrzeug (50) anhand der abgefragten Plantrajektorie (11) des mindestens einen anderen Fahrzeugs (60) zu überprüfen,
wobei das Fahrzeug (50,60) ferner dazu eingerichtet ist, die Maßnahmen i) und/oder ii) nur auszuführen, wenn festgestellt wurde, dass ein der Plantrajektorie (10) des Fahrzeugs (50,60) zugeordnetes Unsicherheitsmaß (30) einen vorgegebenen Unsicherheitsschwellwert (31) überschreitet oder ein der Plantrajektorie (10) des Fahrzeugs (50,60) zugeordnetes Konfidenzmaß (32) einen vorgegebenen Konfidenzschwellwert (33) unterschreitet.

## Claims

1. Method for checking a planned trajectory (10) of a semi-automated or automated vehicle (50),
i) wherein a planned trajectory (10) of the vehicle (50) is transmitted to at least one other vehicle (60) in the vicinity of the vehicle (50), wherein the transmitted planned trajectory (10) is checked in the at least one other vehicle (60) against a planned trajectory (11) of the at least one other vehicle (60), and wherein a check result (20) is transmitted to the vehicle (50),
and/or
ii) wherein a planned trajectory (11) and a current position (12) of at least one other vehicle (60) in the vicinity of the vehicle (50) is queried by the vehicle (50), wherein the planned trajectory (10) of the vehicle (50) is checked in the vehicle (50) against the transmitted planned trajectory (11) of the other vehicle (50),
wherein the measures i) and/or ii) are only carried out if it has been determined that an uncertainty measure (30) assigned to the planned trajectory (10) of the vehicle (50) exceeds a predetermined uncertainty threshold value (31) or that a confidence measure (32) assigned to the planned trajectory (10) of the vehicle (50) falls below a predetermined confidence threshold value (33).

2. Method according to claim 1, **characterized in that** checking the planned trajectory (10) of the vehicle (50) comprises an at least section-by-section comparison of the planned trajectory (10) of the vehicle (50) with the planned trajectory (11) of at least one other vehicle (60).

3. Method according to claim 2, **characterized in that** the comparison of the planned trajectory (10) of the vehicle (50) with the planned trajectory (11) of the at least one other vehicle (60) comprises collision detection.

4. Method according to claim 2 or 3, **characterized in that** a check result (20) is generated according to a voting principle on the basis of comparison results of the comparisons of the planned trajectory (10) of the vehicle (50) with the planned trajectories (11) of a plurality of other vehicles (60).

5. Method according to any of the preceding claims, **characterized in that** a radius around the vehicle (50) in which communication with other vehicles (60) takes place according to the method is determined taking into account a speed (13) and/or at least one other state variable (14) of the vehicle (50) and/or at least one state variable (15) of the vicinity.

6. Method according to any of the preceding claims, **characterized in that** a decision is made on the basis of a check result (20) as to whether the planned trajectory (10) of the vehicle (50) is carried out or discarded.

7. Method according to claim 6, **characterized in that** when the planned trajectory (10) is discarded:
a) a new planned trajectory (10) is generated, or
b) a planned trajectory (11) of another vehicle (60) is at least partially adopted and/or adapted, or
c) an emergency maneuver is performed.

8. System (100) for checking a planned trajectory (10) of a semi-automated or automated vehicle (50), comprising: a plurality of vehicles (50, 60) according to claim 9.

9. Vehicle (50, 60),
wherein the vehicle (50, 60) is configured
i) to transmit a planned trajectory (10) to at least one other vehicle (50) in the vicinity of the vehicle (50) and to receive a check result (20) for the transmitted planned trajectory (10) from the at least one other vehicle (60); furthermore to receive planned trajectories (11) from other vehicles (60), to check a planned trajectory (11) received from another vehicle (60) against the planned trajectory (10) of the vehicle (50) itself, and to transmit a check result (20) to the relevant other vehicle (60),
and/or
ii) to query a planned trajectory (11) and a current position (12) of at least one other vehicle (60) in the vicinity of the vehicle (50) and to check the planned trajectory (10) of the vehicle (50) in the vehicle (50) against the queried planned trajectory (11) of the at least one other vehicle (60),
wherein the vehicle (50, 60) is further configured to carry out the measures i) and/or ii) only if it has been determined that an uncertainty measure (30) assigned to the planned trajectory (10) of the vehicle (50, 60) exceeds a predetermined uncertainty threshold value (31) or that a confidence measure (32) assigned to the planned trajectory (10) of the vehicle (50, 60) falls below a predetermined confidence threshold value (33).

## Revendications

1. Procédé pour la vérification d'une trajectoire planifiée (10) d'un véhicule (50) se déplaçant de manière semi-automatisée ou automatisée,
i) dans lequel une trajectoire planifiée (10) du véhicule (50) est transmise à au moins un autre véhicule (60) dans l'environnement du véhicule (50), dans lequel la trajectoire planifiée (10) transmise est vérifiée dans l'au moins un autre véhicule (60) à l'aide d'une trajectoire planifiée (11) de l'au moins un autre véhicule (60), et dans lequel un résultat de vérification (20) est transmis au véhicule (50),
et/ou
ii) dans lequel une trajectoire planifiée (11) et une position actuelle (12) d'au moins un autre véhicule (60) dans l'environnement du véhicule (50) sont interrogées par le véhicule (50), dans lequel la trajectoire planifiée (10) du véhicule (50) dans le véhicule (50) est vérifiée à l'aide de la trajectoire planifiée (11) transmise de l'autre véhicule (50),
dans lequel les mesures i) et/ou ii) ne sont exécutées que lorsqu'il a été constaté qu'une mesure d'incertitude (30) associée à la trajectoire planifiée (10) du véhicule (50) dépasse par le haut une valeur seuil d'incertitude (31) prédéfinie ou qu'une mesure de confiance (32) associée à la trajectoire planifiée (10) du véhicule (50) dépasse par le bas une valeur seuil de confiance (33) prédéfinie.

2. Procédé selon la revendication 1, **caractérisé en ce que** la vérification de la trajectoire planifiée (10) du véhicule (50) comprend une comparaison au moins dans certaines sections de la trajectoire planifiée (10) du véhicule (50) avec la trajectoire planifiée (11) d'au moins un autre véhicule (60).

3. Procédé selon la revendication 2, **caractérisé en ce que** la comparaison de la trajectoire planifiée (10) du véhicule (50) avec la trajectoire planifiée (11) de l'au moins un autre véhicule (60) comprend une détection de collision.

4. Procédé selon la revendication 2 ou 3, **caractérisé en ce qu'**un résultat de vérification (20) est généré à partir de résultats de comparaison des comparaisons de la trajectoire planifiée (10) du véhicule (50) avec les trajectoires planifiées (11) de plusieurs autres véhicules (60) selon un principe de vote.

5. Procédé selon l'une des revendications précédentes,
**caractérisé en ce qu'**un rayon autour du véhicule (50), dans lequel on communique selon le procédé avec d'autres véhicules (60), est déterminé en prenant en compte une vitesse (13) et/ou au moins une autre grandeur d'état (14) du véhicule (50) et/ou au moins une grandeur d'état (15) de l'environnement.

6. Procédé selon l'une des revendications précédentes,
**caractérisé en ce qu'**il est décidé, à partir d'un résultat de vérification (20), si la trajectoire planifiée (10) du véhicule (50) est exécutée ou rejetée.

7. Procédé selon la revendication 6, **caractérisé en ce que**, lors d'un rejet de la trajectoire panifiée (10) :
a) une nouvelle trajectoire planifiée (10) est générée, ou
b) une trajectoire planifiée (11) d'un autre véhicule (60) est reprise et/ou adaptée au moins partiellement, ou
c) une manœuvre d'urgence est effectuée.

8. Système (100) pour la vérification d'une trajectoire planifiée (10) d'un véhicule (50) se déplaçant de manière semi-automatisée ou automatisée, comprenant :
plusieurs véhicules (50, 60) selon la revendication 9.

9. Véhicule (50, 60),
dans lequel le véhicule (50, 60) est configuré pour
i) transmettre une trajectoire planifiée (10) à au moins un autre véhicule (50) dans l'environnement du véhicule (50) et recevoir un résultat de vérification (20) pour la trajectoire planifiée (10) transmise depuis l'au moins un autre véhicule (60) ; en outre, recevoir des trajectoires planifiée (11) depuis d'autres véhicules (60), vérifier une trajectoire planifiée (11) reçue depuis un autre véhicule (60) à l'aide d'une trajectoire planifiée (10) propre du véhicule (50), et transmettre un résultat de vérification (20) à l'autre véhicule (60) respectif,
et/ou
ii) interroger une trajectoire planifiée (11) et une position actuelle (12) d'au moins un autre véhicule (60) dans l'environnement du véhicule (50) et vérifier la trajectoire planifiée (10) du véhicule (50) dans le véhicule (50) à l'aide de la trajectoire planifiée (11) interrogée de l'au moins un autre véhicule (60),
dans lequel le véhicule (50, 60) est en outre configuré pour n'exécuter les mesures i) et/ou ii) que lorsqu'il a été constaté qu'une mesure d'incertitude (30) associée à la trajectoire planifiée (10) du véhicule (50, 60) dépasse par le haut une valeur seuil d'incertitude (31) prédéfinie ou qu'une mesure de confiance (32) associée à la trajectoire planifiée (10) du véhicule (50, 60) dépasse par le bas une valeur seuil de confiance (33) prédéfinie.
